# EUROPÄISCHE PATENTSCHRIFT

(11) **EP 2 504 139 B1**
(45) Veröffentlichungstag und Bekanntmachung des Hinweises auf die Patenterteilung: **04.10.2017**
(21) Anmeldenummer: 10781685.2
(22) Anmeldetag: 22.11.2010
(51) Int. Cl.: B28D 5/00

(54) **VERFAHREN UND VORRICHTUNG ZUM BEHANDELN VON Si/SiC-HALTIGEN SCHLEIFSCHLÄMMEN**
METHOD AND DEVICE FOR TREATING ABRASIVE SLURRIES CONTAINING SI/SIC
PROCÉDÉ ET DISPOSITIF POUR TRAITER DES POUSSIÈRES DE MEULAGE CONTENANT DU SI/SIC

(30) Priorität: 24.11.2009 DE 102009054348
(43) Veröffentlichungstag der Anmeldung: 03.10.2012
(73) Patentinhaber: Messer Group GmbH, 65843 Sulzbach (DE); Coenen, Wolfgang, 28865 Lilienthal (DE)
(72) Erfinder: COENEN, Wolfgang, 28865 Lilienthal (DE); BERGER, Thomas, 45257 Essen (DE); GOCKEL, Frank, 42553 Velbert (DE)
(74) Vertreter: Münzel, Joachim R.
(86) Internationale Anmeldenummer: PCT/EP2010/067945
(87) Internationale Veröffentlichungsnummer: WO 2011/064170

(56) Entgegenhaltungen:
- EP-A1- 1 351 891
- WO-A1-02/32593
- WO-A1-2006/137098
- WO-A1-2008/013327
- WO-A2-2009/126922
- JP-A- 2001 278 612

## Beschreibung

Die Erfindung betrifft ein Verfahren sowie eine Vorrichtung zum Behandeln von Si/SiC-haltigen Schleifschlämmen. Ein solches Verfahren und Vorrichtung sind offenbart in JP2001278612. Derartige Schleifschlämme fallen insbesondere bei der Herstellung von SiliziumWafern an. In dem derzeitigen gängigsten Verfahren der Waferherstellung wird zunächst Reinsilizium aus Quarz gewonnen und anschließend in Siliziumblöcken oder Siliziumstäben, so genannten "Ingots", gegossen oder gezogen. Diese Ingots werden mittels eines mechanischen Sägeprozesses zu Siliziumscheiben, so genannte Wafer, zersägt. Dieser mechanische Sägeprozess erfolgt nach dem heutigen Stand der Technik ganz überwiegend mittels eines Stahlsägedrahtes, der mit hoher Geschwindigkeit von einer Rolle auf eine zweite Rolle abgespult wird. Der Ingot ist dabei auf eine Glasplatte geklebt, mit der er durch die Säge geschoben wird. Neben dem Sägedraht wird eine Sägesuspension bestehend aus Siliziumkarbid (SiC) als Sägehilfsmittel und Polyethylenglykol (PEG) oder Öl als Kühl- und Trägermittel für das Siliziumkarbid eingesetzt. Die Sägesuspension wird auf den sich abrollenden Stahlsägedraht gegeben, wobei das Siliziumkarbid als relativ hartes Element die eigentliche Sägeleistung erbringt und der Sägedraht lediglich das Siliziumkarbid transportiert. Die verwendete Sägesuspension muss nach mehrmaliger Anwendung ausgewechselt und entweder entsorgt oder aufbereitet werden, da der zunehmende Siliziumabrieb die Sägeeigenschaften verschlechtert. Auf diese Weise bilden sich Schleifschlämme, die neben Silizium einen hohen Anteil von Siliziumkarbid sowie flüssiges Trägermittel beinhalten. Durch den Sägeprozess gehen über 40 % des Silizium-Ausgangsmaterials und das gesamte eingesetzte Siliziumkarbid verloren. Aus diesem Grunde gab es bereits in der Vergangenheit Überlegungen, die im Schleifschlamm enthaltenen Wertstoffe zu rezyklieren.

In der WO 2006/137098 A1 wird vorgeschlagen, das in Schleifschlämmen enthaltene Siliziumkarbid in Hydrozyklonen unter Einsatz von Wasser und Chemikalien herauszulösen. Bei diesem Prozess wird jedoch das Silizium oxidiert und andern Industrieprozessen zugeführt.

Aus der EP 1351891 B1 ist ein Verfahren zur Rückgewinnung von Siliziumkarbid aus mit Polyethylenglykol (PEG) oder Öl verschmutzten Si/SiC - Schleifschlämmen bekannt. Bei diesem Verfahren wird zunächst durch Erhitzen im Vakuum oder einer Inertgasatmosphäre PEG bzw. Öl aus dem Schleifschlamm abgetrennt. Aus dem verbliebenen Si/SiC - Gemisch werden keramische Formkörper gebildet, die in einer Stickstoffatmosphäre bei einer Temperatur gesintert werden, bei der das Silizium mit Stickstoff zu Siliziumnitrid reagiert, das die verbliebenen SiC-Teilchen miteinander verbindet. Auch dieses Verfahren hat in erster Linie die Rückgewinnung von Siliziumkarbid zum Gegenstand.

In der WO 2008/13327 A1 wird eine Apparatur zur Wiedergewinnung von Schleifschlämmen bei der Produktion von Siliziumwafern beschrieben. Die Apparatur umfasst eine Heizeinrichtung, in der der Schleifschlamm auf eine Temperatur zwischen 60°C und dem Siedepunkt des eingesetzten Schleiföls erhitzt wird, und eine Zentrifuge, in der anschließend die Trennung einer öl- und siliziumreichen Flüssigphase von einer siliziumkarbidreichen Phase erfolgt. Eine weitere Zentrifugation ermöglicht die weitere Auftrennung der Flüssigphase.

Die WO 2009/126922 A2 beschreibt ein Verfahren zur Wiederaufbereitung von Silizium, Siliziumkarbid und PEG aus Schleifschlämmen. Bei diesem Gegenstand wird im Schleifschlamm enthaltene Flüssigkeit, beispielsweise Öl, PEG oder Wasser mittels physikalischer Trennverfahren, beispielsweise einer Filterpresse, einem Hydrozyklon oder einer Zentrifuge zumindest weitgehend unter Erhalt eines feuchten, Si/SiC - haltigen Pulvers abgetrennt. Zur Rezyklierung des Siliziums wird das Pulver einem mit Siliziumtetraiodid (Sil₄) befüllten Reaktor zugeführt, in dem sich bei einer Temperatur von etwa 1250°C Siliziumdiiodid (Sil₂) bildet, aus dem anschließend in einem weiteren Reaktor bei einer Temperatur von 700°C bis 1000°C reines Silizium gewonnen wird. Dieses Verfahren ist mit einem hohen apparatetechnischen Aufwand und aufgrund der hohen benötigten Temperaturen mit einem beträchtlichen Energieaufwand verknüpft.

Aufgabe der vorliegenden Erfindung ist daher, die ein alternatives Verfahren zur Rezyklierung von Silizium und/oder Siliziumkarbid aus Schleifschlämmen, insbesondere von bei der Silizium-Waferproduktion anfallenden Schleifschlämmen sowie eine entsprechende Vorrichtung bereitzustellen, das mit einem geringeren Energieverbrauch und einem geringeren apparativen Aufwand als bei Verfahren nach dem Stand der Technik auskommt.

Gelöst wird diese Aufgabe mit einem Verfahren gemäß Patentanspruch 1 sowie mit einer Vorrichtung gemäß Patenanspruch 6. Vorteilhafte Ausgestaltungen sind in den Unteransprüchen angegeben.

Bei dem erfindungsgemäßen Verfahren zum Behandeln von siliziumhaltigen Schleifschlämmen werden zunächst die Schleifschlämme in einer Extraktionskammer mit Kohlendioxid in flüssigem oder überkritischen Zustand in Kontakt gebracht, wobei durch das flüssige oder überkritische Kohlendioxid Öl oder Polyethylenglykol (PEG) enthaltende Bestandteile des Schleifschlammes herausgelöst (extrahiert) werden. Infolge des bevorzugt unter hohem Druck (Hochdruckextraktion) ablaufenden Extraktionsvorgangs wird der weitaus größte Teil der öl- bzw. PEG -haltigen Bestandteile im Kohlendioxid gelöst. Sodann wird das mit den ölhaltigen oder polyethylenglykolhaltigen Bestandteilen beladene überkritische oder flüssige Kohlendioxid vom Schleifschlamm getrennt, wobei ein Silizium und Siliziumkarbid enthaltenes Pulver (im Folgenden: Si/SiC - haltiges Pulver) zurückbleibt, welches anschließend unter Vakuum oder unter einer Inertgasatmosphäre einem Trennverfahren zum Trennen in eine siliziumkarbidhaltige Fraktion und eine Siliziumfraktion zugeführt wird.

Durch die Führung sämtlicher sich an die Extraktion anschließender Verfahrensschritte im Vakuum bzw. unter Inertgasatmosphäre wird insbesondere eine Oxidation des Siliziums und des Siliziumkarbids sicher vermieden, was die anschließende Wiederaufarbeitung dieser Komponenten wesentlich erleichtert.

Als Trennverfahren zum Trennen der Feststofffraktionen des extrahierten Schleifschlammes kann im Rahmen der Erfindung jedes hierzu geeignete Trennverfahren oder eine Kombination mehrerer Trennverfahren in aufeinanderfolgenden Schritten angewandt werden. In einer besonders vorteilhaften Ausführungsform wird das Si/SiC - haltige Pulver mittels eines Inertgases fluidisiert und zum Trennen einer siliziumkarbidhaltigen Fraktion von einer Siliziumfraktion einem Zyklon zugeführt. Wesentlich dabei ist, dass die Fluidisierung nicht mit Luft, sondern mit einem zumindest weitgehend sauerstofffreien Gas erfolgt, um eine Oxidation des Siliziums und/oder des Siliziumkarbids zu vermeiden. Dabei kann es sich beispielsweise um Kohlendioxid, Stickstoff oder ein Edelgas handeln.

Alternativ oder ergänzend zum vorgenannten Trennverfahren in einem Zyklon kann das Si/SiC - haltige Pulver in einem Sichter in eine siliziumkarbidhaltige Fraktion und eine Siliziumfraktion, wobei der Sichter mit einem zumindest weitgehend sauerstofffreien Inertgasstrom betrieben wird. Auch hier ist zur Erzielung eines qualitativ hochwertigen Ergebnisses wesentlich, dass der sowohl der Trennprozess als auch die Zuführung des zu trennenden Si/SiC-haltigen Pulvers in einer zumindest weitgehend sauerstofffreien Atmosphäre erfolgt.

Eine gleichfalls vorteilhafte Ausgestaltung der Erfindung ist dadurch gekennzeichnet, dass das Si/SiC - haltige Pulver einem inerten Fluid zugeführt und anschließend die Trennung in eine siliziumkarbidhaltigen Fraktion und eine Siliziumfraktion mittels Flotation und/oder Sedimentation der Fraktionen erfolgt. Der Trennvorgang erfolgt hier also aufgrund der unterschiedlichen Dichte der beiden Fraktionen mit Hilfe eines geeigneten Fluids. Bei dem Fluid kann es sich um eine Flüssigkeit oder um ein Gas handeln, wobei besonders bevorzugt das Fluid so gewählt ist, dass seine Dichte den jeweiligen Erfordernissen nach Art einer Schwertrübe einstellbar ist.

Eine vorteilhafte Weiterbildung der Erfindung sieht vor, dass das mit den polyethylenglykolhaltigen oder ölhaltigen Bestandteilen beladene flüssige oder überkritische Kohlendioxid verdampft oder entspannt wird und dadurch von den Bestandteilen befreit wird. Bei der Entspannung bzw. dem Verdampfen des Kohlendioxids fallen die Öl- bzw. PEG-haltigen Bestandteile aus und können einer erneuten Verwertung oder der Entsorgung zugeführt werden. Das Kohlendioxid kann anschließend wieder verflüssigt oder in den überkritischen Zustand verbracht und erneut zur Extraktion von Schleifschlamm eingesetzt werden.

Die Aufgabe der Erfindung wird auch durch eine Vorrichtung zum Behandeln von siliziumhaltigen Schleifschlämmen gemäß Anspruch 6 gelöst. Eine erfindungsgemäße Vorrichtung umfasst dabei einen Druckbehälter, der mit einer Zuleitung sowie mit einer Ableitung für Kohlendioxid im flüssigen oder überkritischen Zustand ausgerüstet ist, eine im Druckbehälter aufgenommene Extraktionskammer, deren Wände zumindest abschnittsweise so ausgebildet sind, dass sie für flüssiges, überkritisches oder gasförmiges Kohlendioxid durchlässig, für Feststoffpartikel dagegen zumindest weitgehend undurchlässig ist, und eine Abführeinrichtung für bei der Extraktion in der Extraktionskammer erzeugtes Si/SiC- haltiges Pulver, die mit der Extraktionskammer sowie mit einer Trenneinrichtung zum Trennen einer siliziumkarbidreichen Fraktion von einer siliziumreichen Fraktion im wesentlichen gasdicht verbindbar ist.

Aufgrund der halbdurchlässigen Ausgestaltung der Wände der Extraktionskammer kann bei der Extraktion des Schleifschlammes mit dem flüssigen oder überkritischen Kohlendioxid das mit den öl- oder PEG-haltigen Bestandteilen beladene Kohlendioxid zuverlässig von der zurückbleibenden pulverförmigen Feststofffraktion getrennt werden. Die Extraktionskammer ist weiterhin mit einer Zuführung für Schleifschlämme versehen. Diese bevorzugt als Druckschleuse ausgestaltete Zuführung ermöglicht es einerseits, eine begrenzte Menge an Schleifschlamm vor Beginn der Extraktion in den Extraktor einzufüllen und vorzulegen, andererseits aber auch, frischen Schleifschlamm auch während des Extraktionsvorgangs in den Extraktor kontinuierlich einzudosieren. Die Extraktionskammer ist über eine Abführeinrichtung für Si/SiC - haltiges Pulver mit einer ihrerseits gasdicht abschließbaren Trenneinrichtung zumindest weitgehend gasdicht verbindbar, in der eine Auftrennung der Feststofffraktion in eine siliziumkarbidreiche Fraktion und eine siliziumreiche Fraktion erfolgt. Als "mit der Trenneinrichtung verbindbar" soll hier sowohl eine geschlossene Leitung verstanden werden, die sowohl mit der Extraktionskammer als auch mit der Trenneinrichtung verbunden ist, also auch ein im wesentlichen gasdicht verschließbarer Behälter, der nacheinander an die Extraktionskammer und an die Trenneinrichtung angeschlossen werden kann, um die Zuführung der Feststofffraktion unter zumindest weitgehendem Ausschluss von Luftsauerstoff an die Trenneinrichtung zu gewährleisten.

Als bevorzugte Trenneinrichtung zum Trennen einer siliziumkarbidhaltigen Fraktion von einer Siliziumfraktion kommt insbesondere ein Sichter, ein Sieb oder ein Zyklon oder eine Kombination mehrerer dieser Trenneinrichtungen in Betracht.

Um die Wiederverwertung des eingesetzten Kohlendioxids und/oder der öl- bzw. PEG - haltigen Bestandteile zu ermöglichen, sieht eine weiter vorteilhafte Weiterbildung der Erfindung vor, dass die vom Druckbehälter ausgehende Ableitung für das flüssige oder überkritische Kohlendioxid an einer Entspannungsdüse in einem Separator ausmündet, welcher Separator über eine Gasleitung mit einer Verflüssigungsvorrichtung zum Verflüssigen des gasförmigen Kohlendioxids strömungsverbunden ist, in dem das im Separator entspannte, gasförmige Kohlendioxid wieder in den flüssigen oder überkritischen Zustand bringbar ist, und welche Verflüssigungsvorrichtung zu mit der Zuleitung für Kohlendioxid des Druckbehälter in Strömungsverbindung steht. Bei dieser Ausführungsform der Erfindung wird das Kohlendioxid also im Kreislauf geführt und muss während der Behandlung nur in geringen Mengen durch frisches Kohlendioxid ergänzt werden.

Eine andere zweckmäßige Ausgestaltung der erfindungsgemäßen Vorrichtung sieht vor, dass der Druckbehälter und/oder die Extraktionskammer um eine im Wesentlichen horizontale Achse drehbar gelagert ist. In diesem Falle ist es möglich, den Druckbehälter bzw. die Extraktionskammer während der Extraktion zu drehen. Derartige Systeme sind etwa aus der Lebensmitteltechnik bekannt, z. B. bei der Beladung von Maltodextrin - Pulver mit Gasen. Durch die Rotationsbewegung könnten kleinere Agglomerate im Schleifschlamm schnell aufgebrochen werden, so dass ein feines Pulver gewonnen werden kann.

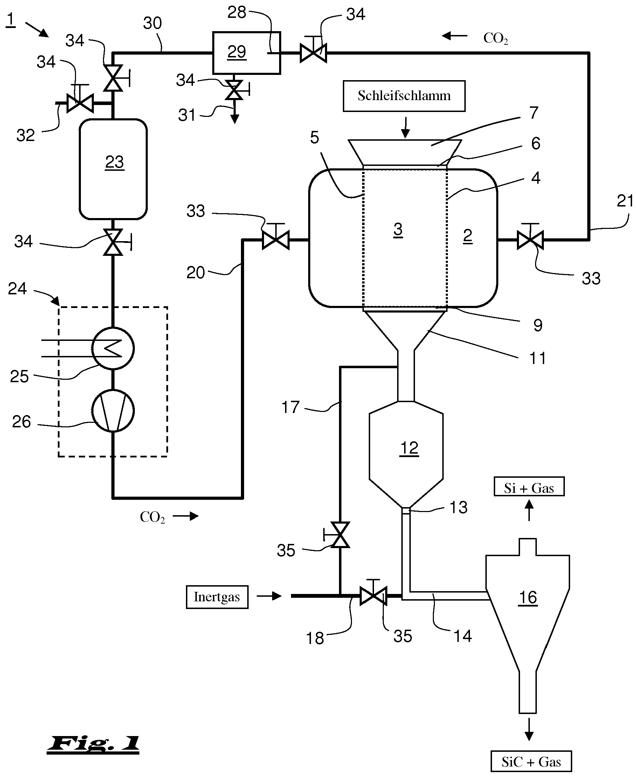

Anhand der Zeichnung soll ein Ausführungsbeispiel der Erfindung näher erläutert werden. Die einzige Zeichnung (Fig. 1) zeigt schematisch den Aufbau einer erfindungsgemäßen Vorrichtung.

Die Vorrichtung 1 umfasst einen für die Hochdruckextraktion von Schleifschlämmen geeigneten Druckbehälter 2. Im Druckbehälter 2 ist die eigentliche Extraktionskammer 3 aufgenommen, die für die Aufnahme des zu behandelnden Schleifschlammes bestimmt ist. Die Extraktionskammer 3 ist vom übrigen Innenraum des Druckbehälters 2 mit Wänden 4, 5 abgeteilt, welche zumindest abschnittsweise für Kohlendioxid im flüssigen oder überkritischen Zustand durchlässig, für Silizium bzw. Siliziumkarbid enthaltende Bestandteile des Schleifschlamms jedoch undurchlässig sind. Realisiert wird dies durch einen entsprechend filter- oder siebartigen Aufbau der Wände 4, 5 bzw. von deren Wandabschnitten. Beispielsweise sind die Wände 4, 5 aus porösen Sintermetallscheiben aufgebaut. Zum Zuführen des Schleifschlammes ist die Extraktionskammer 3 mit einer druckfesten Schleuse 6 und einem Aufnahmetrichter 7 versehen; eine weitere Schleuse 9 ist an einer Entladeöffnung 10 der Extraktionskammer 3 angeordnet. Anstelle zweier getrennter Schleusen 6, 9 ist es prinzipiell auch möglich, die Schleifschlämme über eine einzige Schleuse sowohl zu- als auch abzuführen. In diesem Falle ist beispielsweise der Druckbehälter in hier nicht gezeigter Weise um eine horizontale Achse drehbar gelagert, sodass beim Einfüllen die (einzige) Schleuse nach oben - im geodätischen Sinne - gerichtet ist, beim Entleeren dagegen nach unten. An die Schleuse 9 schließt sich ein Auffangtrichter 11 an, der zumindest dann, wenn die Schleuse 9 geöffnet wird um die Extraktionskammer 3 zu entleeren, zumindest weitgehend gasdicht mit der Schleuse 9 und damit mit der Extraktionskammer 3 verbindbar ist. Der Auffangtrichter 11 mündet in einen Zwischenspeicher 12, in dem das in der Extraktionskammer 3 behandelte Gut zur weiteren Verarbeitung zwischengelagert wird. Der Zwischenspeicher 12, der im Wesentlichen gasdicht aufgebaut und ebenso im Wesentlichen gasdicht mit dem Auffangtrichter 11 verbunden ist, ist über eine Schleuse 13 mit einer Transportleitung 14 verbunden, über die der Weitertransport des im Zwischenspeicher 12 gelagerten Guts erfolgt. Die Transportleitung 14 mündet in eine Trenneinrichtung 16 ein, bei der es sich beispielsweise um einen Sichter oder um einen Fliehkraftabscheider (Zyklon) handeln kann. In den Auffangtrichter 11 und die Transportleitung 14 münden Gaszuleitungen 17, 18 ein, die in hier nicht gezeigter Weise mit einer Quelle für ein Inertgas, beispielsweise ein Edelgas, Stickstoff oder Kohlendioxid, verbunden sind.

Außerhalb der Extraktionskammer 3 ist der Druckbehälter 2 mit einer Zuleitung 20 und einer Ausleitung 21 für Kohlendioxid im flüssigen oder überkritischen Zustand verbunden. Die Zuleitung 20 ist mit einem Kohlendioxidtank 23 verbunden, in dem das Kohlendioxid im Ausführungsbeispiel im gasförmigen oder flüssigen Zustand gelagert wird. Um das im Kohlendioxidtank 23 gelagerte Kohlendioxid auf den gewünschten, flüssigen oder überkritischen Zustand zu bringen, ist stromab zum Kohlendioxidtank 23 eine Kompressionseinheit 24 vorgesehen. Die Kompressionseinheit 24 umfasst einen Kompressor 25 oder mehrere Kompressoren sowie einen oder mehrerer Wärmetauscher 26, in denen dem Kohlendioxid die vom Kompressor 25 zugeführte Kompressionswärme zumindest weitgehend entzogen wird. Bei dem Wärmetauscher 26 bzw. den Wärmetauschern handelt es sich beispielsweise um konventionelle Kältemaschinen oder um kryogene Kühleinrichtungen, bei denen der Wärmetausch mittels eines kondensierten Gases, beispielsweise verflüssigtem Stickstoff, erfolgt. Die mit dem Druckbehälter 2 strömungsverbundene Ausleitung 21 mündet stromab zum Druckbehälter 2 mit einer Entspannungsdüse 28 in einen Separator 29 ein. Durch die Entspannung an der Entspannungsdüse 28 geht das Kohlendioxid vom flüssigen bzw. überkritischen Zustand in den gasförmigen Zustand über und gibt dabei die in der Extraktionskammer 3 eingelösten Substanzen frei. Das gasförmige Kohlendioxid wird anschließend über eine Gaszuleitung 30 dem Kohlendioxidtank 23 zugeführt, während die separierten Substanzen über eine Ableitung 31 abgeführt werden. Über eine Zuleitung 32 kann dem Kohlendioxidtank 23 zusätzliches Kohlendioxid zugeführt werden. Ventile 33, 34, 35 dienen zum Öffnen und Schleißen der Leitungen 17, 18, 20, 21, 30, 31, 32.

Beim Betrieb der Vorrichtung 1 wird der zu behandelnde Schleifschlamm bei geschlossener Schleuse 9 über den Aufgabetrichter 7 und die geöffnete Schleuse 6 in die Extraktionskammer eingefüllt. Anschließend wird die Schleuse 6 geschlossen und im Innern des Druckbehälters 2 der in der Zuleitung 20 herrschende Druck von über 60 bar - bevorzugt ein Druck oberhalb des kritischen Punktes von Kohlendioxid (74 bar) - hergestellt. Durch Einleitung von Kohlendioxid im flüssigen oder überkritischen Zustand in den Druckbehälter 2 über die Zuleitung 20 erfolgt anschließend die Extraktion des eingefüllten Schleifschlamms. Das flüssige oder überkritische Kohlendioxid durchdringt die Wand 5 und kommt mit dem Schleifschlamm in Kontakt. Aufgrund seiner guten Lösungseigenschaften löst sich im Schleifschlamm enthaltenes Öl bzw. PEG im Kohlendioxid fast vollständig auf. Zurück bleibt ein Pulvergemisch aus einer siliziumreichen und einer siliziumkarbidreichen Fraktion (im Folgenden: Si/SiC-haltiges Pulver). Die Ausbildung der Schleusen 6, 9 als Druckschleusen ermöglichen sowohl eine chargenweise Behandlung des Schleifschlammes, bei der jeweils eine vorgegebene Menge an Schleifschlamm eingefüllt, extrahiert und anschließend abgeführt wird, als auch eine kontinuierliche Zu- und Abführung von Schleifschlamm während des laufenden Extraktionsvorgangs.

Das beladene Kohlendioxid wird im flüssigen bzw. überkritischen Zustand über die Ableitung 21 zum Separator 29 geleitet und dort an der Entspannungsdüse 28 auf einen Druck von beispielsweise 50 - 60 bar entspannt. Dabei geht das Kohlendioxid in den gasförmigen Zustand über, wobei die aufgenommenen Bestandteile, also etwa Öl oder PEG im Separator 29 zurückbleiben. Diese Bestandteile werden über die Ableitung 31 entnommen und können einer Wiederverwertung oder einer Entsorgung zugeführt werden. Das bei der Entspannung entstandene gasförmige Kohlendioxid wird dem Kohlendioxidtank 23 zugeführt, und steht somit wieder zur Verfügung, um in der Kompressionseinheit 24 erneut verflüssigt bzw. in den überkritischen Zustand versetzt und über Zuleitung 20 dem Druckbehälter 2 zugeführt zu werden. Durch diese Kreislaufführung des Kohlendioxids werden die Kosten für das Extraktionsmittel minimiert.

Nach einer Behandlungsdauer von typischerweise einigen Minuten werden die Ventile 33 geschlossen und der Druck im Druckbehälter 2 reduziert. Anschließend wird die Schleuse 9 geöffnet und das Si/SiC-haltige Pulver strömt in den Zwischenspeicher 12 ein. Um zu verhindern, dass das Si/SiC-haltige Pulver mit Luftsauerstoff in Kontakt kommt, wird der Auffangtrichter 11 - und damit der Zwischenspeicher 12 - zuvor über Leitung 17 mit Inertgas geflutet. Idealerweise weist dabei die sich bildende Inertgasatmosphäre im Innern des Auffangtrichters 11 bzw. des Zwischenspeichers 12 einen geringen Überdruck gegenüber Umgebungsdruck auf, um das Eindringen von Luftsauerstoff über etwaige Leckagen zu verhindern. Im Zwischenspeicher 12 wird so viel Si/SiC-haltiges Pulver aufgenommen, dass ein einwandfreier Betrieb der bevorzugt im kontinuierlichen Betrieb arbeitenden Trenneinrichtung 16 gewährleistet ist.

Das im Zwischenspeicher 12 gelagerte Si/SiC-haltige Pulver wird anschließend über die Transportleitung 14 der Trenneinrichtung 16 zugeführt. Auch die Transportleitung 18 wurde zuvor mittels Inertgas, das über die Gaszuleitung 18 eingespeist wurde, inertisiert und der darin enthaltende Sauerstoff zumindest weitestgehend verdrängt. Das über die Transportleitung 18 mit Überdruck herangeführte Inertgas kann auch zur Förderung des Si/SiC-haltigen Pulvers in der Transportleitung 14 herangezogen werden. In der Trenneinrichtung 16 erfolgt eine Auftrennung des aus Partikeln mit einer Größe von üblicherweise mit 1 bis 10 µm bestehenden Si/SiC-haltigen Pulvers in eine siliziumreiche bzw. siliziumkarbidarme Fraktion einerseits und eine siliziumkarbidreiche und siliziumarme Fraktion andererseits. Handelt es sich bei der Trenneinrichtung 16 beispielsweise um einen Hochdruckzyklon, wird das Si/SiC-haltige Pulver zuvor mit einem Inertgas fluidisiert und dem Hochdruckzyklon zugeführt. Handelt es bei dem zu Fluidisierung benutzten Inertgas um Kohlendioxid, kann über eine Dichtevariation des Kohlendioxids sogar die Trennschärfe beeinflusst werden.

Als Trenneinrichtung 16 kann auch ein Sichter, insbesondere ein Hochdrucksichter, zum Einsatz kommen, bei dem die Trennung mithilfe eines Inertgasstroms erfolgt. Auch eine Folge mehrerer aufeinander folgender Trennschritte mit dem gleichen oder unterschiedlichen Verfahren kann zum Einsatz kommen, um eine noch höhere Reinheit der voneinander getrennten Fraktionen zu erzielen.

Die in der Trenneinrichtung 16 erzeugte siliziumreiche Fraktion wird in einem anschließenden Schritt (hier nicht gezeigt) - ebenfalls unter Inertgas - einem Schmelzbad zugeführt und aufgeschmolzen. Verunreinigungen, wie restliches Siliziumkarbid oder Metalle, konzentrieren sich als Schlacke auf der Oberfläche auf und können abgeschöpft werden. Es verbleibt in der Schmelze hochreines Silizium, das insbesondere wieder zur Herstellung von Ingots verwendet werden kann. Das SiC kann ebenfalls in an sich bekannter Weise aufgearbeitet und wiederverwertet werden.

### Bezugszeichenliste

- 1.: Vorrichtung
- 2.: Druckbehälter
- 3.: Extraktionskammer
- 4.: CO₂-durchlässige Wand
- 5.: CO₂-durchlässige Wand
- 6.: Schleuse
- 7.: Aufnahmetrichter
- 8.: -
- 9.: Schleuse
- 10.: -
- 11.: Auffangtrichter
- 12.: Zwischenspeicher
- 13.: Schleuse
- 14.: Transportleitung
- 15.: -
- 16.: Trenneinrichtung
- 17.: Gaszuleitung
- 18.: Gaszuleitung
- 19.: -
- 20.: Zuleitung für Kohlendioxid
- 21.: Ausleitung für Kohlendioxid
- 22.: -
- 23.: Kohlendioxidtank
- 24.: Kompressionseinheit
- 25.: Kompressor
- 26.: Wärmetauscher
- 27.: -
- 28.: Entspannungsdüse
- 29.: Separator
- 30.: Gaszuleitung
- 31.: Ableitung
- 32.: Zuleitung
- 33.: Ventile
- 34.: Ventile
- 35.: Ventile

## Patentansprüche

1. Verfahren zum Behandeln von siliziumhaltigen Schleifschlämmen, bei dem
- die Schleifschlämme in einer Extraktionskammer (3) mit Kohlendioxid in flüssigem oder überkritischem Zustand in Kontakt gebracht werden,
- durch das flüssige oder überkritische Kohlendioxid ölhaltige oder polyethylenglykolhaltige Bestandteile des Schleifschlammes zumindest weitgehend herausgelöst werden,
- das mit den ölhaltigen oder polyethylenglykolhaltigen Bestandteilen beladene überkritische oder flüssige Kohlendioxid vom Schleifschlamm getrennt wird, wobei ein Si/SiC - haltiges Pulver zurückbleibt,
- das Si/SiC - haltige Pulver anschließend unter Vakuum oder unter einer Inertgasatmosphäre einem Trennverfahren zum Trennen in eine siliziumkarbidreiche Fraktion und eine siliziumreiche Fraktion zugeführt wird.

2. Verfahren nach Anspruch 1, **dadurch gekennzeichnet, dass** das Si/SiC - haltige Pulver mittels eines Inertgases fluidisiert und anschließend in einem als Trenneinrichtung (16) fungierenden Zyklon in eine siliziumkarbidreiche Fraktion und eine siliziumreiche Fraktion getrennt wird.

3. Verfahren nach Anspruch 1 oder 2, **dadurch gekennzeichnet, dass** das Si/SiC - haltige Pulver in einem als Trenneinrichtung (16) fungierenden Sichter in eine siliziumkarbidreiche Fraktion und eine siliziumreiche Fraktion getrennt wird, der mit einem Inertgasstrom betrieben wird.

4. Verfahren nach einem der vorhergehenden Ansprüche, **dadurch gekennzeichnet, dass** das Si/SiC - haltige Pulver einem inerten Fluid zugeführt und die Trennung in eine siliziumkarbidhaltigen Fraktion und eine Siliziumfraktion durch Flotation und/oder Sedimentation der Fraktionen erfolgt.

5. Verfahren nach einem der vorhergehenden Ansprüche, dass das mit den polyethylenglykolhaltigen oder ölhaltigen Bestandteilen beladene flüssige oder überkritische Kohlendioxid verdampft oder entspannt und dadurch von den ölhaltigen oder polyethylenglykolhaltigen Bestandteilen befreit wird und anschließend zumindest teilweise zum Behandeln der Schleifschlämme zurückgeführt wird.

6. Vorrichtung zum Behandeln von siliziumhaltigen Schleifschlämmen, mit einem Druckbehälter (2), der mit einer Zuleitung (20) sowie mit einer Ableitung (21) für Kohlendioxid im flüssigen oder überkritischen Zustand ausgerüstet ist, und mit einer im Druckbehälter (2) aufgenommenen Extraktionskammer (3), deren Wände (4, 5) zumindest abschnittsweise so ausgebildet sind, dass sie für flüssiges, überkritisches oder gasförmiges Kohlendioxid durchlässig, für Feststoffpartikel dagegen zumindest weitgehend undurchlässig ist, und mit einer Abführeinrichtung (11, 12, 14) für bei der Extraktion in der Extraktionskammer erzeugtes Si/SiC- haltiges Pulver, die mit der Extraktionskammer (3) sowie mit einer Trenneinrichtung (16) zum Trennen einer siliziumkarbidreichen Fraktion von einer siliziumreichen Fraktion im wesentlichen gasdicht verbindbar ist.

7. Vorrichtung nach Anspruch 6, **dadurch gekennzeichnet, dass** die Abführeinrichtung (11, 12, 14) und/oder die Trenneinrichtung (16) mit einer Zuleitung (17, 18) für ein Inertgas in Strömungsverbindung steht.

8. Vorrichtung nach Anspruch 6, **dadurch gekennzeichnet, dass** als Trenneinrichtung (16) zum Trennen einer Siliziumkarbidhaltigen Fraktion von einer Siliziumfraktion ein Sichter, ein Sieb oder ein Zyklon vorgesehen ist.

9. Vorrichtung nach einem der Ansprüche 6 bis 8, **dadurch gekennzeichnet, dass** die vom Druckbehälter (2) ausgehende Ableitung (21) für das flüssige oder überkritische Kohlendioxid an einer Entspannungsdüse (28) in einem Separator (29) ausmündet, welcher Separator (29) über eine Gasleitung (30) mit einer Verflüssigungsvorrichtung (24) zum Verflüssigen des gasförmigen Kohlendioxids strömungsverbunden ist, in dem das im Separator (29) entspannte, gasförmige Kohlendioxid wieder in den flüssigen oder überkritischen Zustand verbringbar ist, und welche Verflüssigungsvorrichtung (24) mit der Zuleitung (20) für Kohlendioxid des Druckbehälters (2) in Strömungsverbindung steht.

10. Vorrichtung nach einem der Ansprüche 6 bis 9, **dadurch gekennzeichnet, dass** die der Druckbehälter (2) und/oder die Extraktionskammer (3) drehbar gelagert ist.

## Claims

1. Process for treating silicon-containing grinding sludges, wherein
- the grinding sludges are brought into contact with carbon dioxide in the liquid or supercritical state in an extraction chamber (3),
- oil-containing or polyethylene glycol-containing constituents of the grinding sludge are at least largely dissolved out by the liquid or supercritical carbon dioxide,
- the supercritical or liquid carbon dioxide loaded with the oil-containing or polyethylene glycol-containing constituents is separated from the grinding sludge, leaving an Si/SiC-containing powder,
- the Si/SiC-containing powder is subsequently fed under reduced pressure or under an inert gas atmosphere to a separation process for separation into a silicon carbon-rich fraction and a silicon-rich fraction.

2. Process according to Claim 1, **characterized in that** the Si/SiC-containing powder is fluidized by means of an inert gas and subsequently separated into a silicon carbon-rich fraction and a silicon-rich fraction in a cyclone functioning as separation device (16).

3. Process according to Claim 1 or 2, **characterized in that** the Si/SiC-containing powder is separated into a silicon carbon-rich fraction and a silicon-rich fraction in a classifier which is operated using an inert gas stream and functions as separation device (16).

4. Process according to any of the preceding claims, **characterized in that** the Si/SiC-containing powder is fed to an inert fluid and the separation into a silicon carbide-containing fraction and a silicon fraction is carried out by floatation and/or sedimentation of the fractions.

5. Process according to any of the preceding claims, **characterized in that** the liquid or supercritical carbon dioxide loaded with the polyethylene glycol-containing or oil-containing constituents is vaporized or depressurized and in this way freed of the oil-containing or polyethylene glycol-containing constituents and is subsequently at least partly recirculated to the treatment of the grinding sludges.

6. Apparatus for treating silicon-containing grinding sludges, comprising a pressure vessel (2) which is equipped with a feed conduit (20) and with a discharge conduit (21) for carbon dioxide in the liquid or supercritical state and comprising an extraction chamber (3) which is accommodated in the pressure vessel (2) and the walls (4,5) of which are at least in sections configured so that they are permeable to liquid, supercritical or gaseous carbon dioxide but at least largely impermeable to solid particles and comprising a discharge device (11, 12, 14) for Si/SiC-containing powder produced in the extraction in the extraction chamber, which discharge device can be connected in a substantially gastight manner to the extraction chamber (3) and also to a separation device (16) for separation of a silicon carbide-rich fraction from a silicon-rich fraction.

7. Apparatus according to Claim 6, **characterized in that** the discharge device (11, 12, 14) and/or the separation device (16) is in hydrodynamic communication with a feed conduit (17, 18) for an inert gas.

8. Apparatus according to Claim 6, **characterized in that** a classifier, a sieve or a cyclone is provided as separation device (16) for separation of a silicon carbide-containing fraction from a silicon fraction.

9. Apparatus according to any of Claims 6 to 8, **characterized in that** the discharge line (21) for the liquid or supercritical carbon dioxide going out from the pressure vessel (2) opens at an expansion nozzle (28) into a separator (29), which separator (29) is hydrodynamically connected via a gas conduit (30) to a liquefaction apparatus (24) for liquefying the gaseous carbon dioxide in which the gaseous carbon dioxide which has been depressurized in the separator (29) can be brought back into the liquid or supercritical state, and which liquefaction apparatus (24) is in hydrodynamic communication with the feed conduit (20) for carbon dioxide of the pressure vessel (2).

10. Apparatus according to any of Claims 6 to 9, **characterized in that** the pressure vessel (2) and/or the extraction chamber (3) is mounted so as to be rotatable.

## Revendications

1. Procédé de traitement de poussières de meulage contenant du silicium, selon lequel
- les poussières de meulage sont mises en contact dans une chambre d'extraction (3) avec du dioxyde de carbone à l'état liquide ou supercritique,
- des constituants contenant de l'huile ou contenant du polyéthylène glycol des poussières de meulage sont au moins essentiellement éliminés par le dioxyde de carbone liquide ou supercritique,
- le dioxyde carbone supercritique ou liquide chargé avec les constituants contenant de l'huile ou contenant du polyéthylène glycol est séparé des poussières de meulage, une poudre contenant Si/SiC demeurant,
- la poudre contenant Si/SiC est ensuite introduite sous vide ou sous une atmosphère de gaz inerte dans un procédé de séparation pour la séparation en une fraction riche en carbure de silicium et une fraction riche en silicium.

2. Procédé selon la revendication 1, **caractérisé en ce que** la poudre contenant Si/SiC est fluidisée au moyen d'un gaz inerte, puis séparée dans un cyclone fonctionnant en tant que dispositif de séparation (16) en une fraction riche en carbure de silicium et une fraction riche en silicium.

3. Procédé selon la revendication 1 ou 2, **caractérisé en ce que** la poudre contenant Si/SiC est séparée dans un trieur fonctionnant en tant que dispositif de séparation (16), qui est exploité avec un courant de gaz inerte, en une fraction riche en carbure de silicium et une fraction riche en silicium.

4. Procédé selon l'une quelconque des revendications précédentes, **caractérisé en ce que** la poudre contenant Si/SiC est introduite dans un fluide inerte et la séparation en une fraction contenant du carbure de silicium et une fraction de silicium a lieu par flottation et/ou sédimentation des fractions.

5. Procédé selon l'une quelconque des revendications précédentes, **caractérisé en ce que** le dioxyde de carbone liquide ou supercritique chargé avec les constituants contenant du polyéthylène glycol ou contenant de l'huile est évaporé ou détendu, et ainsi débarrassé des constituants contenant de l'huile ou contenant du polyéthylène glycol, puis au moins partiellement recyclé pour le traitement des poussières de meulage.

6. Dispositif pour le traitement de poussières de meulage contenant du silicium, comprenant un contenant sous pression (2), qui est équipé d'une conduite d'alimentation (20) et d'une conduite de déchargement (21) pour le dioxyde de carbone à l'état liquide ou supercritique, et comprenant une chambre d'extraction (3) logée dans le contenant sous pression (2), dont les parois (4, 5) sont au moins en partie configurées pour être perméables au dioxyde de carbone liquide, supercritique ou gazeux, en revanche au moins essentiellement imperméables aux particules solides, et comprenant un dispositif de déchargement (11, 12, 14) pour la poudre contenant Si/SiC formée lors de l'extraction dans la chambre d'extraction, qui peut être raccordé de manière essentiellement étanche aux gaz avec la chambre d'extraction (3), ainsi qu'avec un dispositif de séparation (16) pour la séparation d'une fraction riche en carbure de silicium d'une fraction riche en silicium.

7. Dispositif selon la revendication 6, **caractérisé en ce que** le dispositif de déchargement (11, 12, 14) et/ou le dispositif de séparation (16) sont en connexion fluidique avec une conduite d'alimentation (17, 18) pour un gaz inerte.

8. Dispositif selon la revendication 6, **caractérisé en ce qu'**un trieur, un tamis ou un cyclone est prévu en tant que dispositif de séparation (16) pour la séparation d'une fraction contenant du carbure de silicium d'une fraction de silicium.

9. Dispositif selon l'une quelconque des revendications 6 à 8, **caractérisé en ce que** la conduite de déchargement (21) partant du contenant sous pression (2) pour le dioxyde de carbone liquide ou supercritique débouche au niveau d'une buse de détente (28) dans un séparateur (29), ledit séparateur (29) étant en connexion fluide par une conduite de gaz (30) avec un dispositif de liquéfaction (24) pour la liquéfaction du dioxyde de carbone gazeux, dans lequel le dioxyde de carbone gazeux détendu dans le séparateur (29) peut être remis à l'état liquide ou supercritique, ledit dispositif de liquéfaction (24) étant en connexion fluidique avec la conduite d'alimentation (20) pour le dioxyde de carbone du contenant sous pression (2).

10. Dispositif selon l'une quelconque des revendications 6 à 9, **caractérisé en ce que** le contenant sous pression (2) et/ou la chambre d'extraction (3) sont montés rotatifs.
